# EUROPÄISCHE PATENTSCHRIFT

(11) **EP 0 828 138 B1**
(45) Veröffentlichungstag und Bekanntmachung des Hinweises auf die Patenterteilung: **30.07.2003**
(21) Anmeldenummer: 97115579.1
(22) Anmeldetag: 09.09.1997
(51) Int. Cl.: G01B 11/24, G01B 9/021, G01B 11/30

(54) **Anordnung zur Prüfung von Oberflächen**
Device for examining surfaces
Dispositif pour examiner des surfaces

(30) Priorität: 09.09.1996 DE 19636386
(43) Veröffentlichungstag der Anmeldung: 11.03.1998
(73) Patentinhaber: ROBERT BOSCH GMBH, 70442 Stuttgart (DE)
(72) Erfinder: Drabarek, Pawel, 75233 Tiefenbronn (DE); Schwider, Johannes, 91058 Erlangen (DE)

(56) Entgegenhaltungen:
- EP-A- 0 682 226
- DD-A- 106 769
- US-A- 4 696 572
- US-A- 5 039 223
- US-A- 5 424 828
- US-A- 5 546 186

## Beschreibung

### Stand der Technik

Die Erfindung bezieht sich auf eine interferometrische Messanordnung zur Prüfung von Oberflächen, mit mindestens zwei synthetischen Hologrammen, bei der aus einer, z.B. von einem Laser abgegebenen, einfallenden Strahlung mindestens zwei Teilstrahlen gebildet werden, von denen der eine nach Beugung in dem ersten Hologramm auf die Oberfläche gerichtet und im weiteren Verlauf auf eine Stelle des weiteren Hologramms gelenkt ist, auf die auch der andere, nicht auf die Oberfläche gelenkte Teilstrahl auftrifft, und bei der ein durch diese Überlagerung beim Auftreffen auf das weitere Hologramm der beiden Teilstrahlen gebildetes Interferenzmuster die Information über die Oberflächenform trägt.

Eine derartige interferometrische Messanordnung ist in der DD 106 769 C1 als bekannt ausgewiesen. Bei dieser bekannten Messanordnung sind axial vor und hinter einem zylinderförmigen Prüfling synthetische, computererzeugte Transmissionshologramme angeordnet. Ein von dem in Strahlungsrichtung vor dem Prüfling angeordneten Transmissionshologramm gebeugter Teilstrahl wird auf die gekrümmte Oberfläche des Prüflings gerichtet und von dort auf eine Stelle des in Strahlungsrichtung hinter dem Prüfling angeordneten Transmissionshologramms gerichtet, auf die auch der durch das vordere Transmissionshologramm ungebeugt durchtretende Teilstrahl trifft. Hinter dem hinteren Transmissionshologramm entsteht dadurch ein Interferenzmuster, das bei der vorgesehenen Form des Prüflings z.B. eine gleichmäßige Ausleuchtung aufweist, während es bei Formabweichung ein davon abweichendes Interferenzinuster zeigt.

Eine weitere derartige interferometrische Messanordnung ist auch in Thomas Dresel, Johannes Schwider, Alexander Wehrhahn, Sergey Babin, Grazing incidence interferometry applied to measurement of cylindrical surfaces, Optical Engineering, Vol 34, No. 12, 3531-3535, 1995 angegeben. Diese Messanordnungen eignen sich für die Prüfung von Durchgangsbohrungen.

### Vorteile der Erfindung

Der Erfindung liegt die Aufgabe zugrunde, eine interferometrische Messanordnung der eingangs genannten Art bereitzustellen, die auch z.B. für die Messung von Sacklochbohrungen oder dgl. geeignet ist.

Diese Aufgabe wird mit den im Patentanspruch 1 angegebenen Merkmalen gelöst. Hiernach ist also vorgesehen, dass das erste Hologramm als Reflexionshologramm ausgebildet ist und dass der andere Teilstrahl ein an dem Reflexionshologramm unter der Beugungsordnung O reflektierter Strahl ist.

Das Reflexionshologramm kann auch im Innern eines hohlen Prüflings untergebracht werden und ist damit z.B. für die Überprüfung von Sacklochbohrungen geeignet. Die Oberflächenform muss dabei nicht zylinderförmig sein, da mittels der computerhergestellten Hologramme eine Abstimmung auf Soll-Oberflächen derart erfolgen kann, dass bei der Soll-Form ein gleichmäßig ausgeleuchtetes Interferenzmuster entsteht, während bei Abweichung von der Soll-Form ein abweichendes Interferenzmuster entsteht. Der Aufbau der Messanordnung ist dabei einfach.

Ebenfalls wird die Aufgabe mit einer interferometrischen Messanordnung gemäß Anspruch 5 gelöst. Auch mit dieser Anordnung ist bei einfachem Aufbau eine Messung der Oberfläche innerhalb eines Sacklochs möglich, wobei nur der eine zur Erzeugung des Interferenzmusters ausgenutzte Teilstrahl an dem Reflexionshologramm und anschließend an der inneren Oberfläche des Prüflings reflektiert wird, während der andere Teilstrahl außerhalb des Prüflings über eine Umlenkanordnung auf das weitere Hologramm zur Erzeugung des Interferenzmusters gelenkt wird. Weiterhin wird ein an dem Reflexionshologramm in Beugungsordnung O reflektierter anderer Teilstrahl vor einem Auftreffen auf das weitere Hologramm abgehalten.

Der Aufbau gemäß dem ersten Ausführungsbeispiel kann mit wenigen optischen Bauelementen derart ausgeführt sein, dass im Strahlengang vor dem Reflexionshologramm ein Strahlteiler angeordnet ist, den zumindest ein Teil der einfallenden Strahlung geradlinig durchläuft, und dass die beiden Teilstrahlen mittels des Strahlteilers auf das als Transmissionshologramm ausgebildete weitere Hologramm gelenkt werden. Dabei ist eine günstige Messanordnung derart aufgebaut, dass der Strahlteiler so angeordnet ist, dass die von dem Reflexionshologramm in O. Beugungsordnung reflektierte Strahlung rechtwinklig umgelenkt und senkrecht auf das seitlich beabstandete, parallel zur einfallenden Strahlung angeordnete Transmissionshologramm gerichtet ist. Hierdurch liegt das Transmissionshologramm seitlich außerhalb der einfallenden Strahlung, und das Interferenzmuster kann leicht ausgewertet werden.

Für eine Vereinfachung der Auswertung ist es ferner günstig, wenn das Transmissionshologramm oder Reflexionshologramm zur Auswertung mittels Phase-Shift-Interferometrie oder Heterodyninterferometrie mittels einer Bewegungseinrichtung in vorgegebener Weise bewegbar ist. Die Phase-Shift-Interferometrie und die Heterodyninterferometrie sind an sich bekannt, wozu z.B. auf die DE 43 17 064 A1 und die EP 491 749 sowie darin genannte weitere Literaturstellen hingewiesen sei. Im Prinzip werden dabei Änderungen von Phasendifferenzen ausgewertet, wobei eine günstige Modulationsfrequenz gewählt ist.

Bei der zweiten Ausführungsform besteht ein vorteilhafter Aufbau darin, dass die Umlenkanordnung als senkrecht zu dem anderen Teil der einfallenden Strahlung angeordneter Spiegel ausgebildet ist, dass das als Transmissionshologramm ausgebildete weitere Hologramm dem Spiegel gegenüberliegend auf der anderen Seite des Strahlteilers angeordnet ist und dass der von dem Reflexionshologramm in der Beugungsordnung 0 reflektierte andere Teilstrahl mittels einer zwischen dem Reflexionshologramm und dem Strahlteiler angeordneten Lambdahalbe-Platte/ Polarisator-Einrichtung abgehalten ist. Dieser Aufbau besteht aus wenigen, relativ einfach zu Justierenden optischen Bauteilen.

Ebenfalls wird die Aufgabe unit einer Messanordnung nach Anspruch 8 gelöst. Dabei wird der Spiegel und das Transmissionshologramm ersetzt durch ein zweites Reflexionshologramm, das anstelle des Spiegels angeordnet wird. Dadurch reduziert sich die Anzahl der optischen Bauteile nochmals.

Auch hier ist eine einfache, genaue Auswertung mittels Phase-Shift-Interferometrie oder Heterodyninterferometrie möglich, wenn vorgesehen ist, dass der Spiegel zur Auswertung mittels Phase-Shift-Interferometrie oder Heterodyninterferometrie in vorgegebener Weise in Normalenrichtung mittels einer Bewegungseinrichtung bewegt ist.

Bewegte Teile bei Auswertung mittels der Phase-Shift-Interferometrie oder Heterodyninterferometrie werden dadurch vermieden, daß die einfallende Strahlung zur Auswertung mittels Phase-Shift-Interferometrie oder Heterodyninterferometrie eine vorgegebene Frequenzverschiebung aufweist, wobei die unterschiedlich langen Wege des an dem Reflexionshologramm über die innere Oberfläche des Prüflings reflektierten Teilstrahls und des über die Umlenkanordnung geführten Teilstrahls ausgenutzt werden.

Mit den genannten Maßnahmen sind sehr genaue Messungen möglich, wie sie z.B. für Aggregate der Dieseleinspritztechnik gefordert werden.

Die Erfindung wird nachfolgend anhand von Ausführungsbeispielen unter Bezugnahme auf die Zeichnung näher erläutert.

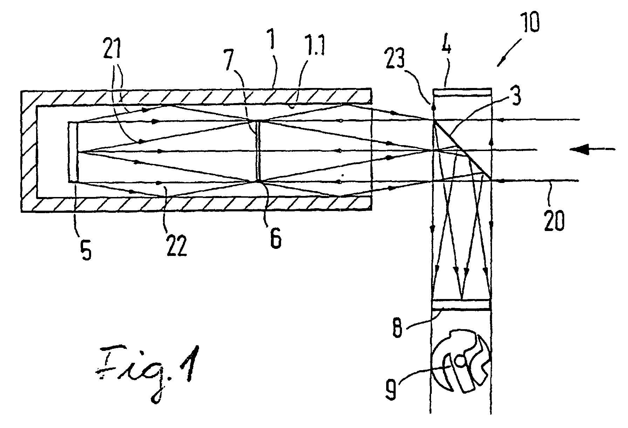

Figur 1 zeigt eine interferometrische Meßanordnung 10. Diese weist ein in einer Sacklochbohrung eines Prüflings 1 senkrecht zur Achse des Prüflings angeordnetes Reflexionshologramm 5 sowie ein seitlich von einer einfallenden Strahlung 20 angeordnetes Transmissionshologramm 8 auf. Vor dem Prüfling 1 ist außerdem ein Strahlteiler 3 angeordnet, auf den die einfallende Strahlung 20 auftrifft. Auf der dem Transmissionshologramm 8 gegenüberliegenden Seite des Strahlteilers 3 ist ein Spiegel 4 angeordnet. In dem Sackloch des Prüflings 1 ist zwischen der Eingangsöffnung des Sacklochs und dem Reflexionshologramm 5 eine Blockiereinrichtung mit einem Polarisator 6 und einer Lambdahalbe-Platte 7 angeordnet, mit der ein von dem Reflexionshologramm 5 in 0. Beugungsordnung reflektierter Teilstrahl 22 bei Bedarf abgeblockt wird.

Bei einem ersten Ausführungsbeispiel fehlen die Blockiereinrichtung mit dem Polarisator 6 und der Lambdahalbe-Platte 7 sowie auch der Spiegel 4. Die einfallende Strahlung 20 tritt durch den Strahlteiler 3 in die Sacklochbohrung ein und fällt auf das Reflexionshologramm 5. Auf diesem werden zwei Teilstrahlen 21 und 22 gebildet, wobei der eine Teilstrahl 21 z.B. der in der ersten Beugungsordnung reflektierte Teilstrahl und der andere Teilstrahl der in der O.Beugungsordnung reflektierte Teilstrahl ist. Der eine Teilstrahl 21 fällt in flachem Winkel auf die innere Oberfläche 1.1 des Prüflings 1, wobei der Einfallswinkel so flach ist, daß die gegenüber der Wellenlänge bei Metallen üblicherweise deutlich größeren Rauhtiefen sich nicht störend auswirken. Der eine Teilstrahl 21 wird an der inneren Oberfläche 1.1 reflektiert und anschließend mittels des Strahlteilers 3 auf das Transmissionshologramm 8 gerichtet. Der andere, in O.Beugungsordnung reflektierte Teilstrahl 22 gelangt ohne Reflexion an der Oberfläche des Prüflings 1 unmittelbar auf den Strahlteiler 3 und wird ebenfalls auf das Transmissionshologramm 8 gerichtet. Die beiden Teilstrahlen ergeben beim Durchgang durch das Transmissionshologramm 8 ein Interferenzmuster, das die Information der geprüften inneren Oberfläche 1.1 trägt. Das Reflexionshologramm 5 und das Transmissionshologramm 8 sind synthetisch beispielsweise mittels Computer hergestellt und auf die Form der zu messenden Oberfläche 1.1 abgestimmt, so daß sich bei fehlerfreier Oberfläche 1.1 als Soll-Zustand eine gleichmäßige Ausleuchtung des Interferenzmusters 9 einstellt, während bei Formabweichung deutliche Leuchtdichtestrukturen bzw. Streifen erkennbar sind, aus denen eine Formabweichung erkennbar ist.

Bei einem weiteren Ausführungsbeispiel sind die in der Figur gezeigte Blockiereinrichtung mit der Lambdahalbe-Platte 7 und dem Polarisator 6 sowie der Spiegel 4 vorhanden. Auch hierbei tritt die einfallende Strahlung 20 durch den Strahlteiler 3, wobei jedoch ein Teil 23 der einfallenden Strahlung rechtwinklig auf den Spiegel 4 gelenkt und von diesem auf das auf der anderen Seite des Strahlteilers 3 angeordnete Transmissionsgitter 8 fällt. Der durch den Strahlteiler 3 gelassene Teil der einfallenden Strahlung 20 fällt in die Sacklochbohrung und gelangt über den Polarisator 6 und die Lambdahalbe-Platte 7 auf das Reflexionshologramm 5. Der in der ersten Beugungsordnung an dem Reflexionshologramm 5 gebeugte Teilstrahl 21 wird an der inneren Oberfläche 1.1 des Prüflings 1 reflektiert und an dem Strahlteiler 3 auf das Transmissionshologramm 8 abgelenkt, wo er sich mit dem anderen Teil 23 der einfallenden Strahlung überlagert, so daß sich auch hierbei ein Interferenzmuster 9 ergibt, das eine Abweichung von einer Soll-Form angibt. Der von dem Reflexionshologramm 5 in 0.Beugungsordnung reflektierte Teilstrahl 22 wird mittels der Blockiereinrichtung mit der Lambdahalbe-Platte 7 und dem Polarisator 6 vor einem Auftreffen auf das Transmissionshologramm 8 abgehalten.

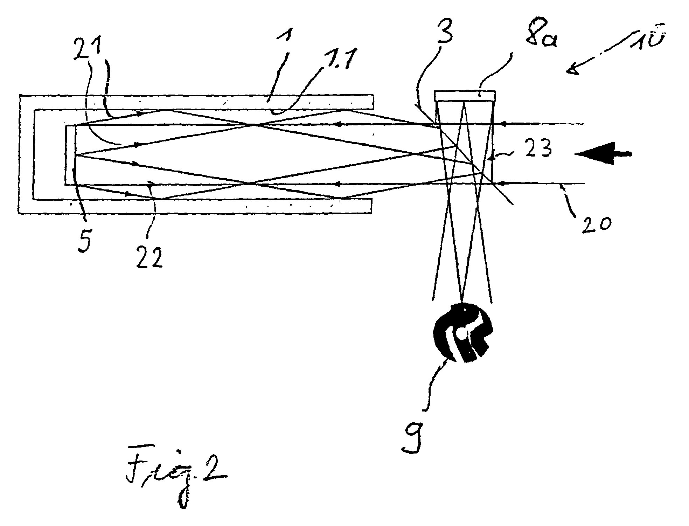

Figur 2 zeigt eine alternative Ausgestaltung des beschriebenen weiteren Ausführungsbeispiels. In den Figuren 1 und 2 sind gleiche Teile jeweils mit denselben Bezugszeichen versehen. Der in Figur 1 gezeigte Spiegel 4 entfällt. Er ist durch ein zweites Reflexionshologramm 8a ersetzt. Das in Figur 1 gezeigte Transmissionshologramm 8 entfällt. Auch bei dieser alternativen Ausgestaltung kann die Blockiereinrichtung mit der Lambdahalbe-Platte 7 und dem Polarisator 6 zum Unterdrücken des vom Reflexionshologramm 5 in nullter Beugungsordnung reflektierten Teilstrahls 22 gemäß Figur 1 vorgesehen sein. In beiden beschriebenen Ausgestaltungen, bei denen der reflektierte Teilstahl 22 zu unterdrücken ist, kann die Blockiereinrichtung durch eine Ausgestaltung des Reflexionshologramms 5 mit einem vorgegebenen blaze-Winkel auch entfallen. In Figur 2 ist die Blockiereinrichtung mit der Lambdahalbe-Platte und dem Polarisator 6 daher nicht eingetragen.

Die beschriebenen interferometrischen Meßanordnungen 10 können zur weiteren, besseren Auswertung mit einer Einrichtung für eine Phase-Shift-Interferometrie oder Heterodyninterferometrie ausgestattet sein.

Beim ersten Ausführungsbeispiel kann dabei das Transmissionshologramm oder Reflexionshologramm 5 in vorbestimmter Weise bewegt werden, so daß sich aus der Modulation der Phasendifferenz der beiden Teilstrahlen die Prüfergebnisse ableiten lassen. Zu der Phase-Shift-Interferometrie und der Heterodyninter ferometrie sei im einzelnen auf die bereits erwähnte EP 491 749 und die DE 43 17 064 A1 sowie darin genannte weitere Literaturstellen hingewiesen.

Bei den anderen Ausführungsbeispielen kann der Spiegel 4 bzw. das zweite Reflektionshologramm 8a in Normalenrichtung mit einer geeigneten Bewegungsfrequenz verschoben werden oder die einfallende Strahlung 20 kann eine Frequenzverschiebung z.B. durch Ansteuern eines die einfallende Strahlung 20 abgebenden Lasers aufweisen. Der dabei erforderliche optische Umweg wird durch die beiden verschieden langen Teilstrahlen 21 und 23 gebildet; bei dieser Technik ist kein bewegliches Teil erforderlich.

Die beschriebenen Maßnahmen lassen bei relativ einfachem Aufbau sehr genaue Vermessungen von Oberflächen beispielsweise auch innerhalb von Sacklöchern zu.

## Patentansprüche

1. Interferometrische Messanordnung (10) zur Prüfung von Oberflächen, mit mindestens zwei synthetischen Hologrammen (5, 8), bei der aus einer, z.B. von einem Laser abgegebenen, einfallenden Strahlung (20) mindestens zwei Teilstrahlen (21, 22) gebildet werden, von denen der eine Teilstrahl (21) nach Beugung in dem ersten Hologramm (5) auf die Oberfläche (1.1) gerichtet und im weiteren Verlauf auf eine Stelle des weiteren Hologramms (8) gelenkt ist, auf die auch der andere, nicht auf die Oberfläche (1.1) gelenkte Teilstrahl (22) auftrifft, und bei der ein durch diese Überlagerung beim Auftreffen auf das weitere Hologramm (8) der beiden Teilstrahlen (21, 22) gebildetes Interferenzmuster die Information über die Oberflächenform trägt,
**dadurch gekennzeichnet,**
**dass** das erste Hologramm als Reflexionshologramm (5) ausgebildet ist und dass der andere Teilstrahl (22) ein an dem Reflexionshologramm (5) unter der Beugungsordnung O reflektierter Strahl ist, wobei
im Strahlengang vor dem Reflexionshologramm (5) ein Strahlteiler (3) angeordnet ist, den zumindest ein Teil der einfallenden Strahlung (20) geradlinig durchläuft, und wobei
die beiden Teilstrahlen (21, 22) mittels des Strahlteilers (3) auf das weitere Hologramm (8) gelenkt werden.

2. Messanordnung nach Anspruch 1,
**dadurch gekennzeichnet,**
**dass** das weitere Hologramm als Transmissionshologramm (8) ausgebildet ist.

3. Messanordnung nach Anspruch 2,
**dadurch gekennzeichnet,**
**dass** das Transmissionshologramm (8) oder das Reflexionshologramm (5) senkrecht zur einfallenden Strahlung (20) ausgerichtet ist und
**dass** der Strahlteiler (3) so angeordnet ist, dass die von dem Reflexionshologramm (5) in O. Beugungsordnung reflektierte Strahlung am Strahlteiler (3) rechtwinklig umgelenkt und senkrecht auf das seitlich beabstandete, parallel zur einfallenden Strahlung (20) angeordnete Transmissionshologramm (8) gerichtet ist.

4. Messanordnung nach einem der vorhergehenden Ansprüche,
**dadurch gekennzeichnet,**
**dass** das Reflexionshologramm (5) zur Auswertung mittels Phase-Shift-Interferometrie oder Heterodyninterferometrie mittels einer Bewegungseinrichtung in vorgegebener Weise bewegbar ist.

5. Interferometrische Messanordnung (10) zur Prüfung von Oberflächen, mit mindestens zwei synthetischen Hologrammen, bei der aus einer, z.B. von einem Laser abgegebenen, einfallenden Strahlung (20) mindestens zwei Teilstrahlen (21, 23) gebildet werden, von denen der eine nach Beugung in dem ersten Hologramm (5) auf die Oberfläche (1.1) gerichtet und im weiteren Verlauf auf eine Stelle des weiteren Hologramms (8) gelenkt ist, auf die auch der andere, nicht auf die Oberfläche (1.1) gelenkte Teilstrahl (23) auftrifft, und bei der ein durch diese Überlagerung beim Auftreffen auf das weitere Hologramm (8) der beiden Teilstrahlen (21, 23) gebildetes Interferenzmuster die Information über die Oberflächenform trägt,
**dadurch gekennzeichnet,**
**dass** das erste Hologramm als Reflexionshologramm (5) ausgebildet ist,
**dass** im Strahlengang vor dem Reflexionshologramm (5) ein Strahlteiler (3) angeordnet ist, den ein Teil der einfallenden Strahlung (20) durchläuft und von dem ein anderer Teil (23) der einfallenden Strahlung (20) als der andere Teilstrahl über eine Umlenkanordnung (4) auf das weitere Hologramm (8) gerichtet ist und
**dass** ein an dem Reflexionshologramm (5) in der Beugungsanordnung O reflektierter anderer Teilstrahl (22) vor einem Auftreffen auf das weitere Hologramm (8) abgehalten ist.

6. Messanordnung nach Anspruch 5,
**dadurch gekennzeichnet,**
**dass** die Umlenkanordnung als senkrecht zu dem anderen Teil (23) der einfallenden Strahlung (20) angeordneter Spiegel (4) ausgebildet ist,
**dass** das als Transmissionshologramm (8) ausgebildete weitere Hologramm dem Spiegel (4) gegenüberliegend auf der anderen Seite des Strahlteilers (3) angeordnet ist und
**dass** der von dem Reflexionshologramm (5) in der Beugungsordnung O reflektierte andere Teilstrahl (22) einer Wellenlänge λ mittels einer zwischen dem Reflexionshologramm (5) und dem Strahlteiler (3) angeordneten Lambdahalbe-Platte/Polarisator-Einrichtung (6,7) abgehalten ist.

7. Messanordnung nach Anspruch 5 oder 6,
**dadurch gekennzeichnet,**
**dass** der Spiegel (4) zur Auswertung mittels Phase-Shift-Interferometrie oder Heterodyninterferometrie in vorgegebener Weise in Normalenrichtung mittels einer Bewegungseinrichtung bewegbar ist.

8. Interferometrische Messanordnung (10) zur Prüfung von Oberflächen, mit mindestens zwei synthetischen Hologrammen, bei der aus einer, z.B. von einem Laser abgegebenen, einfallenden Strahlung (20) mindestens zwei Teilstrahlen (21, 23) gebildet werden, von denen der eine nach Beugung in dem ersten Hologramm (5) auf die Oberfläche (1.1) gerichtet und im weiteren Verlauf auf eine Stelle des weiteren Hologramms (8) gelenkt ist, auf die auch der andere, nicht auf die Oberfläche (1.1) gelenkte Teilstrahl (23) auftrifft, und bei der ein durch diese Überlagerung beim Auftreffen auf das weitere Hologramm (8) der beiden Teilstrahlen (21, 23) gebildetes Interferenzmuster die Information über die Oberflächenform trägt,
**dadurch gekennzeichnet,**
**dass** das erste Hologramm als Reflexionshologramm (5) ausgebildet ist,
**dass** im Strahlengang vor dem Reflexionshologramm (5) ein Strahlteiler (3) angeordnet ist, den ein Teil der einfallenden Strahlung (20) durchläuft und von dem ein anderer Teil (23) der einfallenden Strahlung (20) als der andere Teilstrahl auf das weitere Hologramm gelenkt ist, welches als zweites Reflexionshologramm (8a) ausgebildet ist und
**dass** ein an dem ersten Reflexionshologramm (5) in der nullten Beugungsordnung reflektierter Teilstrahl (22) vor einem Auftreffen auf das zweite Reflexionshologramm (8a) abgehalten ist.

9. Messanordnung nach Anspruch 5 oder 8,
**dadurch gekennzeichnet,**
**dass** die einfallende Strahlung (20) zur Auswertung mittels Phase-Shiftlnterferometrie oder Heterodyninterferometrie eine vorgegebene Frequenzverschiebung aufweist.

## Claims

1. Interferometric measuring arrangement (10) for examining surfaces, having at least two synthetic holograms (5, 8), in the case of which there are formed from an incident beam (20), for example emitted by a laser, two partial beams (21, 22) of which one partial beam (21) is directed, after diffraction in the first hologram (5), onto the surface (1.1) and is guided in its further course onto a point on the further hologram (8) on which the other partial beam (22), not guided onto the surface (1.1), also impinges, and in the case of which arrangement an interference pattern formed by this superimposition upon the impingement on the further hologram (8) of the two partial beams (21, 22) bears the information about the surface shape, **characterized in that** the first hologram is designed as a reflection hologram (5), and **in that** the other partial beam (22) is a beam reflected at the reflection hologram (5) with zero-order diffraction, there being arranged in the beam path upstream of the reflection hologram (5) a beam splitter (3) which is transversed rectilinearly by at least a portion of the incident beam (20) and the two partial beams (21, 22) being guided onto the further hologram (8) by means of the beam splitter (3).

2. Measuring arrangement according to Claim 1, **characterized in that** the further hologram is designed as a transmission hologram (8).

3. Measuring arrangement according to Claim 2, **characterized in that** the transmission hologram (8) or the reflection hologram (5) is aligned perpendicular to the incident beam (20), and **in that** the beam splitter (3) is arranged such that the beam reflected with zero-order diffraction by the reflection hologram (5) is reflected at right angles to the beam splitter (3) and directed perpendicularly onto the laterally spaced apart transmission hologram (8), which is arranged parallel to the incident beam (20).

4. Measuring arrangement according to one of the preceding claims, **characterized in that** the reflection hologram (5) can be moved in a prescribed way with the aid of a moving device for the purpose of evaluation by means of phase shift interferometry or heterodyne interferometry.

5. Interferometric measuring arrangement (10) for examining surfaces, having at least two synthetic holograms, in the case of which there are formed from an incident beam (20), for example emitted by a laser, two partial beams (21, 22) of which one is directed, after diffraction in the first hologram (5), onto the surface (1.1) and is guided in its further course onto a point on the further hologram (8) on which the other partial beam (22), not guided onto the surface (1.1), also impinges, and in the case of which arrangement an interference pattern formed by this superimposition upon the impingement on the further hologram (8) of the two partial beams (21, 22) bears the information about the surface shape, **characterized in that** the first hologram is designed as a reflection hologram (5), **in that** there is arranged in the beam path upstream of the reflection hologram (5) a beam splitter (3) which is traversed by a portion of the incident beam (20) and which directs another portion (23) of the incident beam (20) as the other partial beam onto the further hologram (8) via a deflecting arrangement (4), and **in that** another partial beam (22) reflected with zero-order diffraction at the reflection hologram (5) is restrained from impinging on the further hologram (8).

6. Measuring arrangement according to Claim 5, **characterized in that** the deflecting arrangement is designed as a mirror (4) arranged perpendicular to the other portion (23) of the incident beam (20), **in that** the further hologram designed as transmission hologram (8) is arranged opposite the mirror (4) on the other side of the beam splitter (3), and **in that** the other partial beam (22), reflected with zero-order diffraction by the reflection hologram (5), of wavelength λ is restrained by means of a lambda half plate/polarizer device (6, 7) arranged between the reflection hologram (5) and the beam splitter (3).

7. Measuring arrangement according to Claim 5 or 6, **characterized in that** the mirror (4) can be moved in a prescribed way in the direction of the normal by means of a moving device for the purpose of evaluation by means of phase shift interferometry or heterodyne interferometry.

8. Interferometric measuring arrangement (10) for examining surfaces, having at least two synthetic holograms, in the case of which there are formed from an incident beam (20), for example emitted by a laser, two partial beams (21, 22) of which one is directed, after diffraction in the first hologram (5), onto the surface (1.1) and is guided in its further course onto a point on the further hologram (8) on which the other partial beam (22), not guided onto the surface (1.1), also impinges, and in the case of which arrangement an interference pattern formed by this superimposition upon the impingement on the further hologram (8) of the two partial beams (21, 22) bears the information about the surface shape, **characterized in that** the first hologram is designed as a reflection hologram (5), **in that** there is arranged in the beam path upstream of the reflection hologram (5) a beam splitter (3) which is traversed by a portion of the incident beam (20) and which directs another portion (23) of the incident beam (20) as the other partial beam onto the further hologram (8), which is designed as a second reflection hologram (8a), and **in that** another partial beam (22) reflected with zero-order diffraction at the reflection hologram (5) is restrained from impinging on the further hologram (8).

9. Measuring arrangement according to Claim 5 or 8, **characterized in that** the incident beam (20) has a prescribed frequency shift for the purpose of evaluation by means of phase shift interferometry or heterodyne interferometry.

## Revendications

1. Dispositif de mesure interférométrique (10) pour contrôler des surfaces, comportant au moins deux hologrammes de synthèse (5, 8) et qui forme au moins deux faisceaux partiels (21, 22) à partir d'un faisceau incident (20) fourni par exemple par un laser, dans lequel parmi ces faisceaux, un faisceau partiel (21), après réfraction dans le premier hologramme (5), est dirigé vers la surface (1.1) et ensuite vers l'emplacement de l'autre hologramme (8), emplacement vers lequel arrive également l'autre faisceau partiel (22) non dirigé vers la surface supérieure (1.1), et par combinaison à l'arrivée sur l'autre hologramme (8), les deux faisceaux partiels (21, 22) forment un modèle d'interférence qui porte l'information concernant la forme de la surface,
**caractérisé en ce que**
le premier hologramme est un hologramme de réflexion (5) et l'autre faisceau partiel (22) est un faisceau réfléchi sur l'hologramme de réflexion (5) avec un ordre de diffraction 0, et
dans le chemin du faisceau, en amont de l'hologramme de réflexion (5), on a un diviseur de faisceau (3) traversé en ligne droite par au moins une partie du faisceau incident (20), et les deux faisceaux partiels (21, 22) sont déviés par le diviseur de faisceau (3) vers l'autre hologramme (8).

2. Dispositif de mesure selon la revendication 1,
**caractérisé en ce que**
l'autre hologramme est un hologramme par transmission (8).

3. Dispositif de mesure selon la revendication 2,
**caractérisé en ce que**
l'hologramme de transmission (8) ou l'hologramme par réflexion (5) sont alignés perpendiculairement au rayon incident (20), et le diviseur de faisceau (3) est disposé de façon à dévier à angle droit le faisceau réfléchi par l'hologramme de réflexion (5) à diffraction d'ordre 0 sur le diviseur de faisceau (3), pour le diriger dans la direction perpendiculaire sur l'hologramme de transmission (8) écarté latéralement, parallèle au faisceau incident (20).

4. Dispositif de mesure selon l'une des revendications précédentes,
**caractérisé en ce que**
l'hologramme de réflexion (5) est déplacé d'une manière prédéterminée pour l'exploitation à l'aide d'interférométrie à déphasage ou interférométrie hétérodyne par une installation de déplacement d'une façon prédéterminée.

5. Dispositif de mesure interférométrique (10) pour contrôler les surfaces, comportant au moins deux hologrammes de synthèse qui forment au moins deux faisceaux partiels (21, 23) ) à partir d'un faisceau incident (20) fourni par exemple par un laser, faisceaux dont l'un, après diffraction dans le premier hologramme (5), est dirigé vers la surface (1.1) et est dévié au cours de la suite du trajet vers un point de l'autre hologramme (8) que rencontre également l'autre faisceau partiel (23) non dévié vers la surface supérieure (1.1), et pour lequel la combinaison de l'autre hologramme (8) des deux faisceaux partiels (21, 23) forme un modèle d'interférence portant l'information concernant la forme de surface,
**caractérisé en ce que**
le premier hologramme est un hologramme de réflexion (5), un diviseur de faisceau (3) étant placé dans le chemin du faisceau en amont de l'hologramme de réflexion (5), ce diviseur étant traversé par une partie du faisceau incident (20) et l'autre faisceau (23) du faisceau incident (20) est dirigé comme autre faisceau partiel par le dispositif de déviation (4) vers l'autre hologramme (8), et
un autre faisceau partiel (22), réfléchi par l'hologramme de réflexion (5) d'ordre de flexion 0, est retenu par l'arrivée sur l'autre hologramme (8).

6. Dispositif de mesure selon la revendication 5,
**caractérisé en ce que**
le dispositif de déviation est un miroir (4) installé perpendiculairement à l'autre partie (23) du faisceau incident (20), et l'autre hologramme en forme d'hologramme de transmission (8) est installé de l'autre côté du diviseur de faisceau (3) à l'opposé du miroir (4), et l'autre faisceau partiel (22) réfléchi par l'hologramme de réflexion (5) avec un ordre de diffraction 0, est retenu par une longueur d'onde (λ) à l'aide d'une installation à polarisateur/plaque (λ/2) (6, 7) installée entre l'hologramme de réflexion (5) et le diviseur de faisceau (3).

7. Dispositif de mesure selon la revendication 5 ou 6,
**caractérisé en ce que**
le miroir (4) est mobile d'une manière prédéterminée dans la direction perpendiculaire par l'intermédiaire d'une installation de mouvement, pour l'exploitation par interférométrie à déphasage ou interférométrie hétérodyne.

8. Dispositif de mesure interférométrique (10) pour contrôler des surfaces, comportant au moins deux hologrammes de synthèse, et qui forme au moins deux faisceaux partiels (21, 23) à partir d'un faisceau incident (20) fourni par exemple par un laser dont l'un est dirigé sur la surface (1.1) après diffraction dans le premier hologramme (5) et au cours de la suite du procédé, un emplacement de l'autre hologramme (8) sur lequel arrive également l'autre faisceau partiel (23) non dévié vers la surface supérieure (1.1), et dans lequel la combinaison des deux faisceaux partiels (21, 23) arrivant sur l'autre hologramme (8), forme un modèle d'interférence contenant l'information relative à la forme de la surface,
**caractérisé en ce que**
le premier hologramme est un hologramme de réflexion (5) et dans le chemin du faisceau, en amont de l'hologramme de réflexion (5) on a un diviseur de faisceau (3) traversé par une partie du faisceau incident (20) et qui dévie l'autre partie (23) du faisceau incident (20) comme autre faisceau partiel sur l'autre hologramme en forme de second hologramme de réflexion (8a), et
un faisceau partiel (22) réfléchi par le premier hologramme de réflexion (5) à diffraction 0, est retenu avant son arrivée sur le second hologramme de réflexion (8a).

9. Dispositif de mesure selon les revendications 5 ou 8,
**caractérisé en ce que**
le faisceau incident (20) présente un décalage de fréquence prédéterminé pour son exploitation par interférométrie à déphasage ou interférométrie hétérodyne.
